# EUROPEAN PATENT APPLICATION

(11) **EP 4 243 005 A1**
(43) Date of publication of application: **13.09.2023**
(21) Application number: 23159200.7
(22) Date of filing: 28.02.2023
(51) Int. Cl.: G09G 3/20, G09G 3/00

(54) **DISPLAY DEVICE AND METHOD OF DRIVING THE SAME**

(30) Priority: 10.03.2022 KR 20220030278
(71) Applicant: Samsung Display Co., Ltd., Yongin-si, Gyeonggi-do 17113 (KR)
(72) Inventor: JEONG, GEUNYOUNG, Hwaseong-si (KR)
(74) Representative: Taor, Simon Edward William

(57) **Abstract**

A display device includes a display panel including a first pixel having a first viewing angle and a second pixel having a second viewing angle different from the first viewing angle, and a display panel driver which applies data voltages to the first pixel and the second pixel and renders coordinate image data for one coordinate of input image data for one rendering unit, and the one rendering unit only includes one of a first sub-pixel included in the first pixel and a second sub-pixel included in the second pixel.

## Description

### BACKGROUND

### 1. Field

Embodiments of the inventive concept relate to a display device. More particularly, embodiments of the inventive concept relate to a display device performing a sub-pixel rendering (hereinafter also referred to as 'rendering').

### 2. Description of the Related Art

Generally, a display device may include a display panel, a timing controller, a gate driver, and a source driver. The display panel may include a plurality of gate lines, a plurality of data lines, and a plurality of pixels electrically connected to corresponding gate lines and corresponding data lines. The gate driver may provide gate signals to the gate lines. The source driver may provide data voltages to the data lines. The timing controller may control the gate driver and the source driver.

A conventional pixel has an RGB stripe structure. The RGB stripe structure has a structure including a red subpixel, a blue subpixel, and a green subpixel in one pixel. With a development of smaller electronic devices such as smartphones, higher technology is desired to display high resolution on small screens. As a result, various pixel structures are being developed for displaying higher resolution on the display panel of the same size than that of the conventional RGB stripe structure. As various pixel structures are developed, a technique for rendering RGB form data according to each pixel structure is desired.

### SUMMARY

Embodiments of the inventive concept provide a display device performing a rendering by distinguishing a private pixel and a normal pixel.

Embodiments of the inventive concept also provide a display device performing a rendering by distinguishing a left eye pixel and a right eye pixel.

In an embodiment of the inventive concept, a display device includes a display panel including a first pixel having a first viewing angle and a second pixel having a second viewing angle different from the first viewing angle, and a display panel driver which applies data voltages to the first pixel and the second pixel and renders coordinate image data for one coordinate of input image data for one rendering unit, and the one rendering unit only includes one of a first sub-pixel included in the first pixel and a second sub-pixel included in the second pixel.

In an embodiment, the display panel driver may render the coordinate image data using rendering filter for a first color and a second color.

In an embodiment, the first color may be a red and the second color is a blue.

In an embodiment, a structure of the rendering filter may be determined according to an arrangement of the first pixel and the second pixel.

In an embodiment, a structure of the rendering filter may be determined according to an arrangement of the first pixel and the second pixel and the input image data.

In an embodiment, a structure of the rendering filter may be determined according to an arrangement of the first pixel and the second pixel and a coordinate of the coordinate image data.

In an embodiment, the one rendering unit may include the first sub-pixel and the second sub-pixel when the one coordinate of the coordinate image data is a coordinate of a boundary region between the first sub-pixel and the second sub-pixel, and the one rendering unit may only include one of the first sub-pixel and the second sub-pixel when the one coordinate of the coordinate image data is not the coordinate of the boundary region between the first sub-pixel and the second sub-pixel.

In an embodiment, the rendering filter may include a first rendering filter for the first color and a second rendering filter for the second color.

In an embodiment, structure of the rendering filter for rendering the coordinate image data for an odd row may be different from a structure of the rendering filter for rendering the coordinate image data for an even row.

In an embodiment, the rendering filter may be a one-dimensional rendering filter.

In an embodiment, the rendering filter may be a two-dimensional rendering filter.

In an embodiment, the rendering filter may include a one-dimensional rendering filter and a two-dimensional rendering filter, and the display panel driver selectively may use the one-dimensional rendering filter or the two-dimensional rendering filter according to the input image data.

In an embodiment, the first viewing angle may be narrower than the second viewing angle.

In an embodiment, the display panel driver may drive the first pixel in a first mode, and drives the first pixel and the second pixel in a second mode different from the first mode.

In an embodiment, the first pixel and the second pixel may have a diamond pentile structure.

In an embodiment of the inventive concept, a display device includes a display panel including a first pixel which displays a left eye image and a second pixel which displays a right eye image, and a display panel driver which applies data voltages to the first pixel and the second pixel and renders coordinate image data for one coordinate of input image data for one rendering unit, and the one rendering unit may only include one of a first sub-pixel included in the first pixel and a second sub-pixel included in the second pixel.

In an embodiment of the inventive concept, a method of driving a display device includes receiving input image data, rendering coordinate image data for one coordinate of the input image data for one rendering unit, and displaying an image based on rendering image data generated by rendering the coordinate image data, and the one rendering unit may only include one of a first sub-pixel included in a first pixel having a first viewing angle and a second sub-pixel included in a second pixel having a second viewing angle different from the first viewing angle.

In an embodiment, the coordinate image data may be rendered using rendering filter for a first color and a second color.

In an embodiment, the first viewing angle may be narrower than the second viewing angle.

In an embodiment, the first pixel may be driven in a first mode, and the first pixel and the second pixel are driven in a second mode different from the first mode.

According to an aspect, there is provided a display device as set out in claim 1. Additional features are set out in claims 2 to 11. According to an aspect, there is provided a display device as set out in claim 12. According to an aspect, there is provided a method as set out in claim 13. Additional features are set out in claims 14 and 15.

Therefore, the display device may render coordinate image data for one coordinate of input image data for one rendering unit, and the one rendering unit may only include one of a sub-pixel included in a private pixel and a sub-pixel included in a normal pixel. Accordingly, a display device may perform a rendering by distinguishing a private pixel and a normal pixel, and may prevent color shift according to a viewing angle.

In addition, the display device may render coordinate image data for one coordinate of input image data for one rendering unit, and the one rendering unit may only include one of a sub-pixel included in a left eye pixel and a sub-pixel included in a right eye pixel. Accordingly, a display device may perform a rendering by distinguishing a left eye pixel and a right eye pixel, and may prevent color shift according to a viewing angle.

However, the effects of the inventive concept are not limited to the above-described effects, and may be variously expanded without departing from the scope of the inventive concept.

### BRIEF DESCRIPTION OF THE DRAWINGS

The above and other exemplary embodiments, advantages and features of this disclosure will become more apparent by describing in further detail exemplary embodiments thereof with reference to the accompanying drawings, in which:
FIG. 1 is a block diagram illustrating an embodiment of a display device according to the disclosure.
FIG. 2 is a diagram illustrating an embodiment of a structure of pixels of the display device of FIG. 1.
FIG. 3 is a diagram illustrating an embodiment in which the display device of FIG. 1 renders.
FIGS. 4 and 5 are diagrams illustrating an embodiment in which the display device of FIG. 1 renders using a rendering filter.
FIG. 6 is a diagram illustrating an embodiment of a structure of a pixel according to the disclosure.
FIG. 7 is a diagram illustrating an embodiment in which the display device of FIG. 6 renders using a rendering filter.
FIG. 8 is a diagram illustrating an embodiment of a structure of a pixel according to the disclosure.
FIGS. 9 and 10 are diagrams illustrating an embodiment in which the display device of FIG. 8 renders using a rendering filter.
FIG. 11 is a diagram illustrating an embodiment of a structure of a pixel according to the disclosure.
FIGS. 12 and 13 are diagrams illustrating an embodiment in which the display device of FIG. 11 renders using a rendering filter.
FIG. 14 is a diagram illustrating an embodiment of a structure of a pixel according to the disclosure.
FIG. 15 is a diagram illustrating an embodiment of a structure of a pixel according to the disclosure.
FIGS. 16 to 18 are diagrams illustrating an embodiment in which the display device of FIG. 15 renders using a rendering filter.
FIG. 19 is a diagram illustrating an embodiment of a part of a display panel of a display device according to the disclosure.
FIG. 20 is a diagram illustrating an embodiment of a structure of a pixel of the display device of FIG. 19.
FIG. 21 is a diagram illustrating an embodiment in which the display device of FIG. 19 renders using a rendering filter.
FIG. 22 is a flowchart illustrating an embodiment of a method of driving a display device according to the disclosure.

### DETAILED DESCRIPTION

Hereinafter, embodiments of the inventive concept will be explained in detail with reference to the accompanying drawings.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). The term such as "about" can mean within one or more standard deviations, or within ± 30%, 20%, 10%, 5% of the stated value, for example.

The term "part" or "unit" as used herein is intended to mean a software component or a hardware component that performs a predetermined function. The hardware component may include a field-programmable gate array ("FPGA") or an application-specific integrated circuit ("ASIC"), for example. The software component may refer to an executable code and/or data used by the executable code in an addressable storage medium. Thus, the software components may be object-oriented software components, class components, and task components, and may include processes, functions, attributes, procedures, subroutines, segments of program code, drivers, firmware, micro codes, circuits, data, a database, data structures, tables, arrays, or variables, for example.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

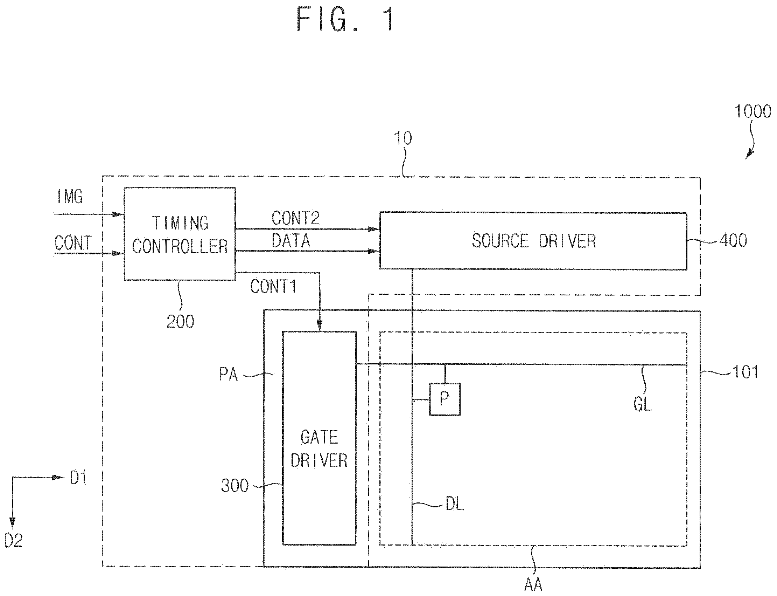

FIG. 1 is a block diagram illustrating an embodiment of a display device 1000 according to the disclosure.

Referring to FIG. 1, the display device 1000 may include a display panel 101 and display panel driver 10. The display panel driver 10 may include a timing controller 200, a gate driver 300, and a source driver 400. In an embodiment, the timing controller 200 and the source driver 400 may be integrated into one chip.

The display panel 101 has a display region AA on which an image is displayed and a peripheral region PA adjacent to the display region AA. In an embodiment, the gate driver 300 may be disposed (e.g., mounted) on the peripheral region PA of the display panel 101.

The display panel 101 may include a plurality of gate lines GL, a plurality of data lines DL, and a plurality of pixels P electrically connected to the data lines DL and the gate lines GL. The gate lines GL may extend in a first direction D1 and the data lines DL may extend in a second direction D2 crossing the first direction D1.

The timing controller 200 may receive input image data IMG and an input control signal CONT from a host processor (e.g., a graphic processing unit ("GPU")). In an embodiment, the input image data IMG may include red image data, green image data and blue image data, for example. In an embodiment, the input image data IMG may further include white image data. In another embodiment the input image data IMG may include magenta image data, yellow image data, and cyan image data, for example. The input control signal CONT may include a master clock signal and a data enable signal. The input control signal CONT may further include a vertical synchronizing signal and a horizontal synchronizing signal.

The timing controller 200 may generate a first control signal CONT1, a second control signal CONT2, and a data signal DATA based on the input image data IMG and the input control signal CONT.

The timing controller 200 may generate the first control signal CONT1 for controlling operation of the gate driver 300 based on the input control signal CONT and output the first control signal CONT1 to the gate driver 300. The first control signal CONT1 may include a vertical start signal and a gate clock signal.

The timing controller 200 may generate the second control signal CONT2 for controlling operation of the source driver 400 based on the input control signal CONT and output the second control signal CONT2 to the source driver 400. The second control signal CONT2 may include a horizontal start signal and a load signal.

The timing controller 200 may receive the input image data IMG and the input control signal CONT, and generate the data signal DATA. The timing controller 200 may output the data signal DATA to the source driver 400.

The gate driver 300 may generate gate signals for driving the gate lines GL in response to the first control signal CONT1 input from the timing controller 200. The gate driver 300 may output the gate signals to the gate lines GL. In an embodiment, the gate driver 300 may sequentially output the gate signals to the gate lines GL, for example.

The source driver 400 may receive the second control signal CONT2 and the data signal DATA from the timing controller 200. The source driver 400 may convert the data signal DATA into data voltages having an analog type. The source driver 400 may output the data voltage to the data lines DL.

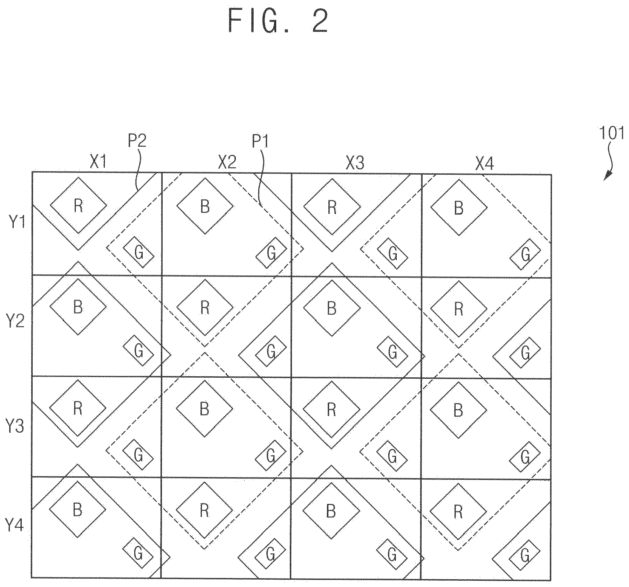

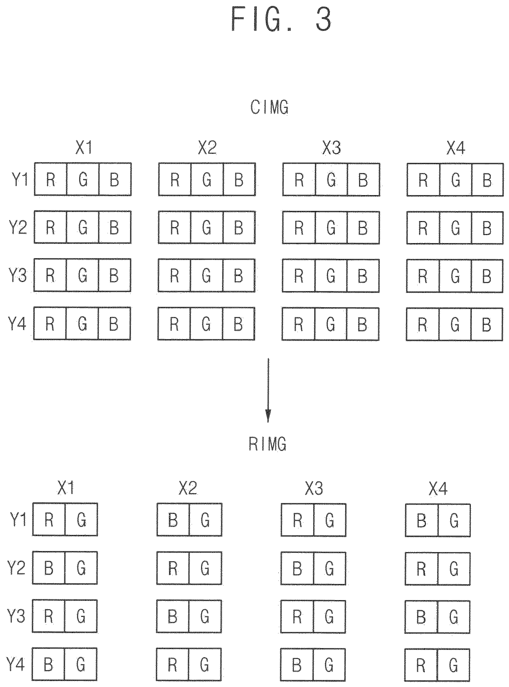

FIG. 2 is a diagram illustrating an embodiment of a structure of the pixels P of the display device 1000 of FIG. 1, and FIG. 3 is a diagram illustrating an embodiment in which the display device 1000 of FIG. 1 renders.

Referring to FIGS. 1 to 3, the display panel 101 may include a first pixel P1 having a first viewing angle and a second pixel P2 having a second viewing angle different from the first viewing angle. The first pixel P1 and the second pixel P2 may have a diamond pentile structure. In an embodiment, each of the first pixel P1 and the second pixel P2 may include a sub-pixel displaying one first color R, a sub-pixel displaying one second color B, and a sub-pixel displaying two third color G, for example. The sub-pixels may be included in a form of a diamond. Here, an area size of the sub-pixel displaying the third color G may be smaller than each of an area size of the sub-pixel displaying the first color R and an area size of the sub-pixel displaying the second color B. The first color R may be red, the second color B may be blue, and the third color G may be green.

Reference characters X1, X2, X3, and X4 shown in FIG. 2 are horizontal coordinates, and Y1, Y2, Y3, and Y4 are vertical coordinates. In an embodiment, the display device 1000 may display an image at the (X1, Y1) coordinates of the display panel 101 based on data of the (X1, Y1) coordinates of rendering image data RIMG which will be described later, for example. In the description, coordinates (e.g., (X1, Y1) coordinates) of a single point may be referred to as a coordinate or one coordinate (e.g., (X1, Y1) coordinate) for convenience.

The pixels having an RGB stripe structure may include one sub-pixel displaying the first color R, one sub-pixel displaying the second color B, and one sub-pixel displaying the third color G at the (X2, Y2) coordinate. However, a pixel having the diamond pentile structure may include two sub-pixels in one coordinate, and two coordinates may share the sub-pixel displaying the first color R and the sub-pixel displaying the second color B. Therefore, the pixels P having diamond pentile structure may display the same resolution with fewer sub-pixels. However, when the pixel P has a structure different from the RGB stripe structure, the display device 1000 may need to render the input image data IMG including data for the first color R, the second color B, and the third color G in one coordinate to fit the structure of the pixels P.

The first pixel P1 may be a private pixel and the second pixel P2 may be a normal pixel P2. In an embodiment, the first viewing angle may be narrower than the second viewing angle, for example. Therefore, when a user views the display panel 101 from a side, an image displayed on the first pixel P1 is seen with a lower luminance than an image displayed on the second pixel P2.

The display panel driver 10 may drive the first pixel P1 in a first mode and drive the first pixel P1 and the second pixel P2 in a second mode. The first mode may be a private mode in which a user viewing the display panel 101 from the side cannot see a normal image, and the second mode may be a general mode in which a user viewing the display panel 101 from the side may see the normal image. When the first sub-pixel included in the first pixel P1 and the second sub-pixel included in the second pixel P2 are consistently included in one rendering unit, a color shift may occur to a user viewing the display panel 101 from the side (i.e., the viewing angles of the first pixel P1 and the second pixel P2 are different).

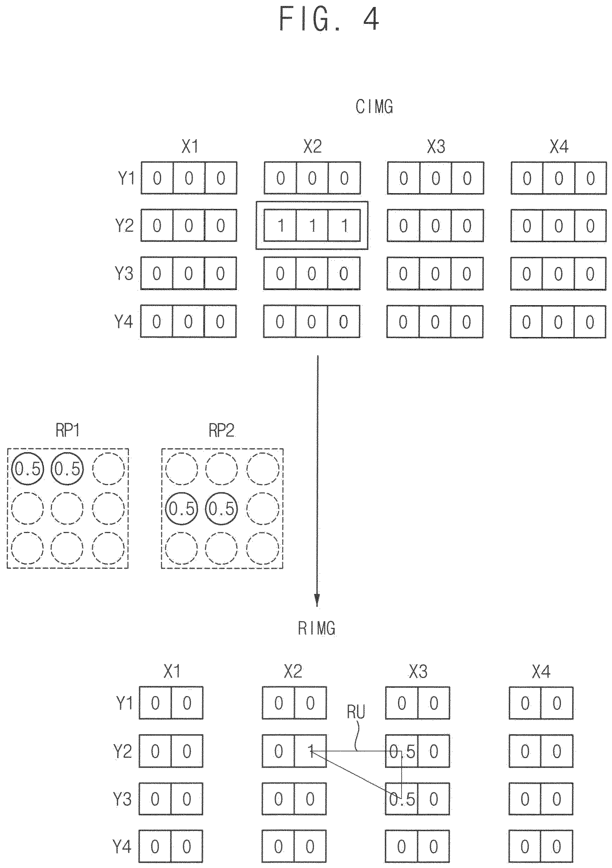

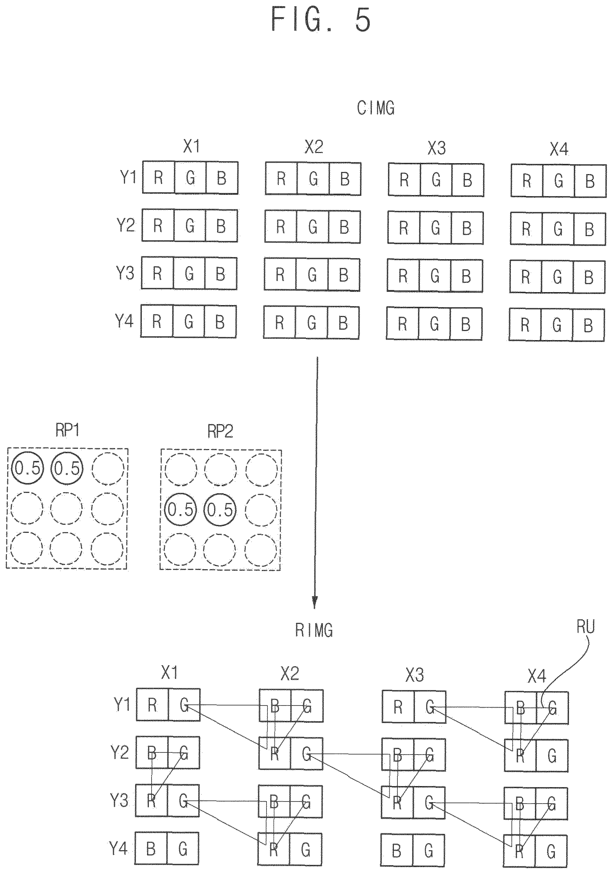

FIGS. 4 and 5 are diagrams illustrating an embodiment in which the display device 1000 of FIG. 1 renders using a rendering filter.

Referring to FIGS. 1 to 5, the display panel driver 10 may render the coordinate image data CIMG for one coordinate of the input image data IMG for one rendering unit. The rendering unit may only include one of the first sub-pixel included in the first pixel P1 and a second sub-pixel included in the second pixel P2. In an embodiment, the rendering unit RU may only include the first sub-pixels of one first pixel P1 or may only include the second sub-pixels of one second pixel P2, for example. The display panel driver 10 may render the coordinate image data CIMG using the rendering filter for the first color R and the second color B. A structure of the rendering filter may be determined according to an arrangement of the first pixel P1 and the second pixel P2. In an embodiment, the rendering filter may be a one-dimensional rendering filter. In another embodiment, the rendering filter may be a two-dimensional rendering filter. Here, the one-dimensional rendering filter may be a filter applied in one direction, and the two-dimensional rendering filter may be a filter applied in two directions.

In an embodiment, the rendering filter may include a first rendering filter RP1 for the first color R and a second rendering filter RP2 for the second color B. In an embodiment, the first rendering filter RP1 may render data for the first color R of the coordinate image data CIMG, and the second rendering filter RP2 may render data of the second color B of the coordinate image data CIMG, for example. In an embodiment, the display panel driver 10 may render data for the third color G of the coordinate image data CIMG without a separate rendering filter. In an embodiment, since the pixel having the diamond pentile structure includes the sub-pixel displaying one third color G at each coordinate, the display panel driver 10 may use data for the third color G of the coordinate image data CIMG as it is as data for the third color G of the rendering image data RIMG, for example.

In an embodiment, it is assumed that the pixel P has a structure shown in FIG. 2. The first rendering filter RP1 and the second rendering filter RP2 may be determined in a form of FIG. 4 so that the rendering unit RU only includes the first sub-pixel or the second sub-pixel, for example. In an embodiment, when the rendering filter is applied to a predetermined coordinate, the display panel driver 10 may apply the rendering filter by arranging a center of the rendering filter at the predetermined coordinate, for example. Hereinafter, it will be described in detail through an example.

It is assumed that the pixel P has the structure as shown in FIG. 2, and the coordinate image data CIMG for the (X2, Y2) coordinate includes data of the first color R having a value of 1, data of the second color B having a value of 1, and data of the third color G having a value of 1. The (X3, Y2) coordinate of the display panel 101 include the second sub-pixel for the second color B. The data for the second color B of the (X3, Y2) coordinate of the coordinate image data CIMG is 0, and the data for the second color B of the (X2, Y2) coordinate of the coordinate image data CIMG is 1. In this case, when the second rendering filter RP2 is applied to the (X3, Y2) coordinate, the rendering image data RIMG may include data for the second color B having a value of 0.5 (1 × 0.5 (left) + 0 × 0.5 (center) = 0.5) at the (X3, Y2) coordinate. The (X3, Y3) coordinate of the display panel 101 may include the second sub-pixel for the first color R. The data of the first color R of the (X3, Y2) coordinate of the coordinate image data CIMG is 0, and the data of the first color R of the (X2, Y2) coordinate of the coordinate image data CIMG is 1. In this case, when the first rendering filter RP1 is applied to the (X3, Y3) coordinate, the rendering image data RIMG may include data for the first color R having a value of 0.5 (1 × 0.5 (upper left) + 0 × 0.5 (top) = 0.5). Therefore, the display panel driver 10 may render the coordinate image data CIMG for the (X2, Y2) coordinate with respect to the second sub-pixels of the (X2, Y2), (X3, Y2), and (X3, Y3) coordinates. That is, when the display panel driver 10 renders the coordinate image data CIMG for the (X2, Y2) coordinate, the rendering unit RU may only include the second sub-pixel. As a result, as shown in FIG. 5, when rendering is performed at all coordinates, the rendering unit RU may only include the first sub-pixel or only include the second sub-pixel.

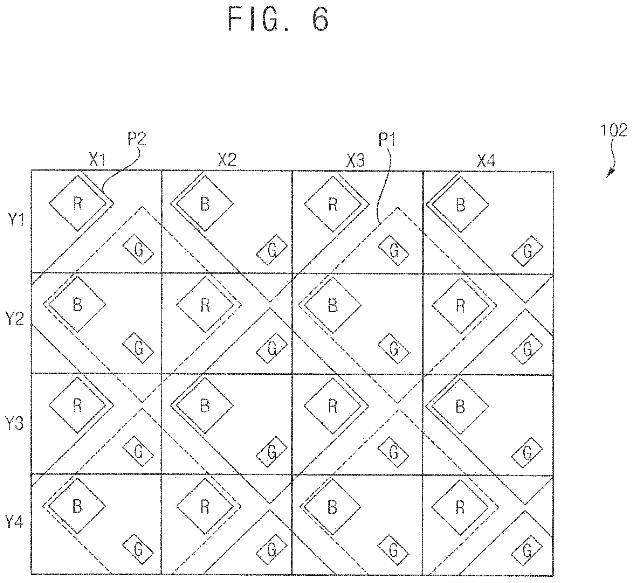

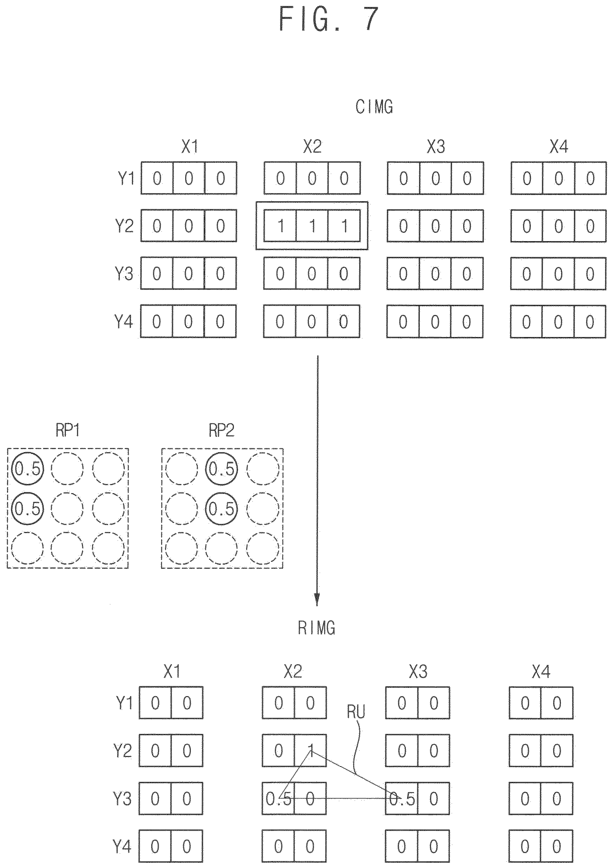

FIG. 6 is a diagram illustrating an embodiment of a structure of a pixel P in embodiments of the inventive concept, and FIG. 7 is a diagram illustrating an embodiment in which the display device of FIG. 6 renders using a rendering filter.

The display device in the illustrated embodiment is substantially the same as the display device 1000 of FIG. 1 except for the structure of the pixels P and the rendering filter. Thus, the same reference numerals are used to refer to the same or similar element, and any repetitive explanation will be omitted.

Referring to FIGS. 1, 6 and 7, it is assumed that the pixel P has the structure shown in FIG. 6, for example. The first rendering filter RP1 and the second rendering filter RP2 may be determined in the form of FIG. 7 so that the rendering unit RU only includes the first sub-pixel or the second sub-pixel. In an embodiment, when the rendering filter is applied to a predetermined coordinate, the display panel driver 10 may apply the rendering filter by arranging a center of the rendering filter at the predetermined coordinate, for example. Hereinafter, it will be described in detail through an example.

It is assumed that the pixel P has the structure as shown in FIG. 6, and the coordinate image data CIMG for the (X2, Y2) coordinate includes data of the first color R having a value of 1, data of the second color B having a value of 1, and data of the third color G having a value of 1. The (X3, Y2) coordinate of the display panel 102 include the second sub-pixel for the second color B. The data for the second color B of the (X2, Y3) coordinate of the coordinate image data CIMG is 0, and the data for the second color B of the (X2, Y2) coordinate of the coordinate image data CIMG is 1. In this case, when the second rendering filter RP2 is applied to the (X2, Y3) coordinate, the rendering image data RIMG may include data for the second color B having a value of 0.5 (1 × 0.5 (top) + 0 × 0.5 (center) = 0.5) at the (X2, Y3) coordinate. The (X3, Y3) coordinate of the display panel 102 may include the second sub-pixel for the first color R. The data of the first color R of the (X3, Y2) coordinate of the coordinate image data CIMG is 0, and the data of the first color R of the (X2, Y2) coordinate of the coordinate image data CIMG is 1. In this case, when the first rendering filter RP1 is applied to the (X3, Y3) coordinate, the rendering image data RIMG may include data for the first color R having a value of 0.5 (1 × 0.5 (upper left) + 0 × 0.5 (left) = 0.5) at the (X3, Y3) coordinate. Therefore, the display panel driver 10 may render the coordinate image data CIMG for the (X2, Y2) coordinate with respect to the second sub-pixels of the (X2, Y2), (X2, Y3), and (X3, Y3) coordinates. That is, when the display panel driver 10 renders the coordinate image data CIMG for the (X2, Y2) coordinate, the rendering unit RU may only include the second sub-pixel. As a result, when rendering is performed at all coordinates, the rendering unit RU may only include the first sub-pixel or only include the second sub-pixel.

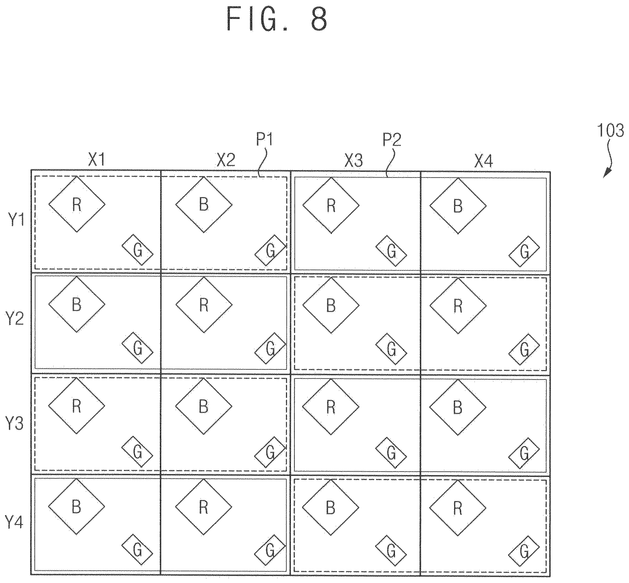

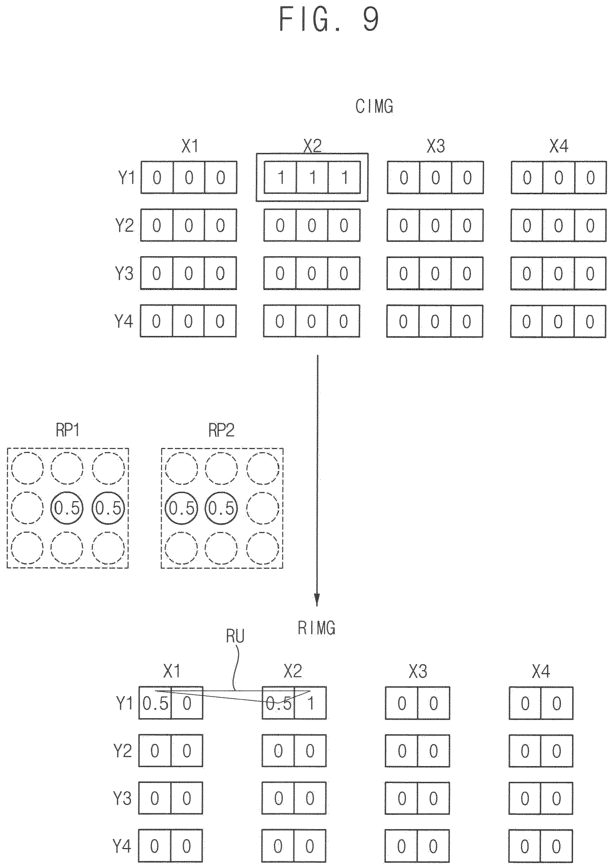

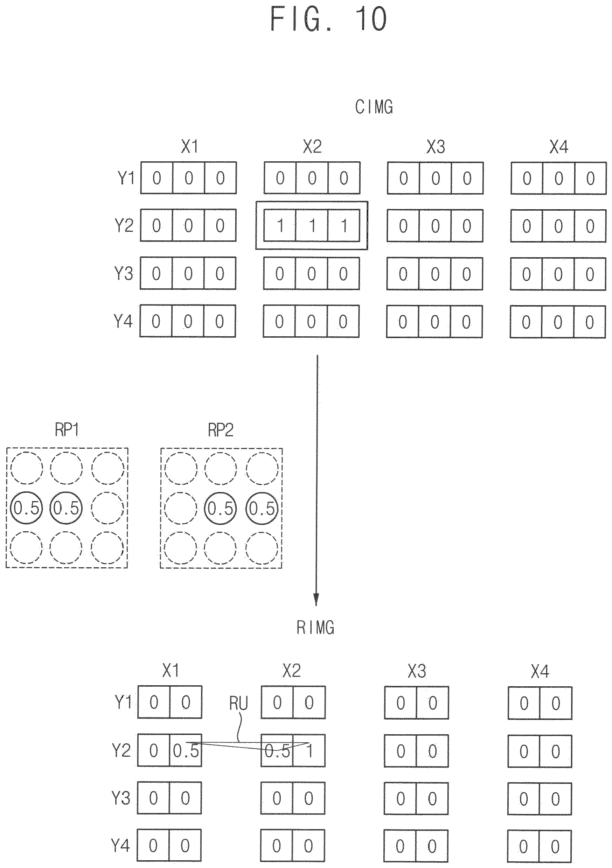

FIG. 8 is a diagram illustrating an embodiment of a structure of the pixel P in embodiments of the inventive concept, and FIGS. 9 and 10 are diagrams illustrating an embodiment in which the display device of FIG. 8 renders using the rendering filter.

The display device in the illustrated embodiment is substantially the same as the display device 1000 of FIG. 1 except for the structure of the pixels P and the rendering filter. Thus, the same reference numerals are used to refer to the same or similar element, and any repetitive explanation will be omitted.

Referring to FIGS. 1, and 8 to 10, a structure of the rendering filter for rendering the coordinate image data CIMG for an odd row may be different from a structure of the rendering filter for rendering the coordinate image data CIMG for an even row.

In an embodiment, it is assumed that the pixel P has the structure shown in FIG. 8, for example. The first rendering filter RP1 and the second rendering filter RP2 in the odd rows may be determined in the form of FIG. 9 and the first rendering filter RP1 and the second rendering filter RP2 in the even rows may be determined in the form of FIG. 10 so that the rendering unit RU only includes the first sub-pixel or the second sub-pixel. In an embodiment, when the rendering filter is applied to a predetermined coordinate, the display panel driver 10 may apply the rendering filter by arranging a center of the rendering filter at the predetermined coordinate, for example. Hereinafter, it will be described in detail through an example.

It is assumed that the pixel P has the structure as shown in FIG. 8, and the coordinate image data CIMG for the (X2, Y1) coordinate (i.e., the odd row) includes data of the first color R having a value of 1, data of the second color B having a value of 1, and data of the third color G having a value of 1. The (X2, Y1) coordinate of the display panel 103 include the first sub-pixel for the second color B. The data for the second color B of the (X1, Y1) coordinate of the coordinate image data CIMG is 0, and the data for the second color B of the (X2, Y1) coordinate of the coordinate image data CIMG is 1. In this case, when the second rendering filter RP2 is applied to the (X2, Y1) coordinate, the rendering image data RIMG may include data for the second color B having a value of 0.5 (1 × 0.5 (center) + 0 × 0.5 (left) = 0.5) at the (X2, Y1) coordinate. The (X1, Y1) coordinate of the display panel 103 may include the first sub-pixel for the first color R. The data of the first color R of the (X1, Y1) coordinate of the coordinate image data CIMG is 0, and the data of the first color R of the (X2, Y1) coordinate of the coordinate image data CIMG is 1. In this case, when the first rendering filter RP1 is applied to the (X3, Y3) coordinate, the rendering image data RIMG may include data for the first color R having a value of 0.5 (1 × 0.5 (right) + 0 × 0.5 (center) = 0.5). Therefore, the display panel driver 10 may render the coordinate image data CIMG for the (X2, Y1) coordinate with respect to the first sub-pixels of the (X1, Y1) and (X2, Y1) coordinates.

It is assumed that the pixel P has the structure as shown in FIG. 8, and the coordinate image data CIMG for the (X2, Y2) (i.e., the even row) coordinate includes data of the first color R having a value of 1, data of the second color B having a value of 1, and data of the third color G having a value of 1. The (X1, Y2) coordinate of the display panel 103 include the second sub-pixel for the second color B. The data for the second color B of the (X1, Y2) coordinate of the coordinate image data CIMG is 0, and the data for the second color B of the (X2, Y2) coordinate of the coordinate image data CIMG is 1. In this case, when the second rendering filter RP2 is applied to the (X1, Y2) coordinate, the rendering image data RIMG may include data for the second color B having a value of 0.5 (1 × 0.5 (right) + 0 × 0.5 (center) = 0.5) at the (X1, Y2) coordinate. The (X2, Y2) coordinate of the display panel 103 may include the second sub-pixel for the first color R. The data of the first color R of the (X1, Y2) coordinate of the coordinate image data CIMG is 0, and the data of the first color R of the (X2, Y2) coordinate of the coordinate image data CIMG is 1. In this case, when the first rendering filter RP1 is applied to the (X2, Y2) coordinate, the rendering image data RIMG may include data for the first color R having a value of 0.5 (1 × 0.5 (center) + 0 × 0.5 (left) = 0.5) at the (X2, Y2) coordinate. Therefore, the display panel driver 10 may render the coordinate image data CIMG for the (X2, Y2) coordinate with respect to the second sub-pixels of the (X1, Y2) and (X2, Y2) coordinates.

That is, when the display panel driver 10 renders the coordinate image data CIMG for the (X2, Y1) coordinate, the rendering unit RU may only include the first sub-pixel and when the display panel driver 10 renders the coordinate image data CIMG for the (X2, Y2) coordinate, the rendering unit RU may only include the second sub-pixel. As a result, when rendering is performed at all coordinates, the rendering unit RU may only include the first sub-pixel or only include the second sub-pixel.

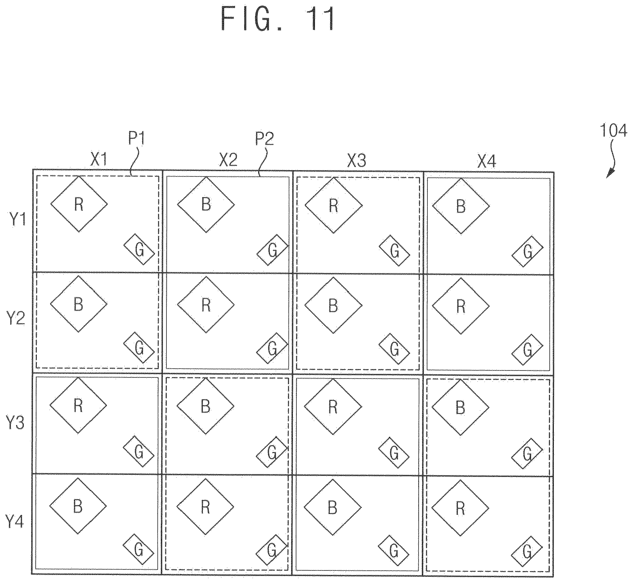

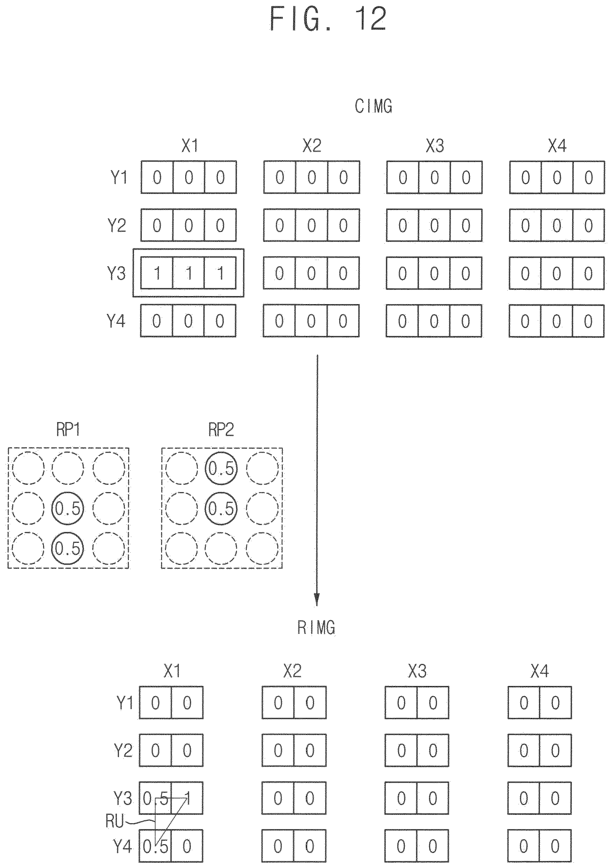

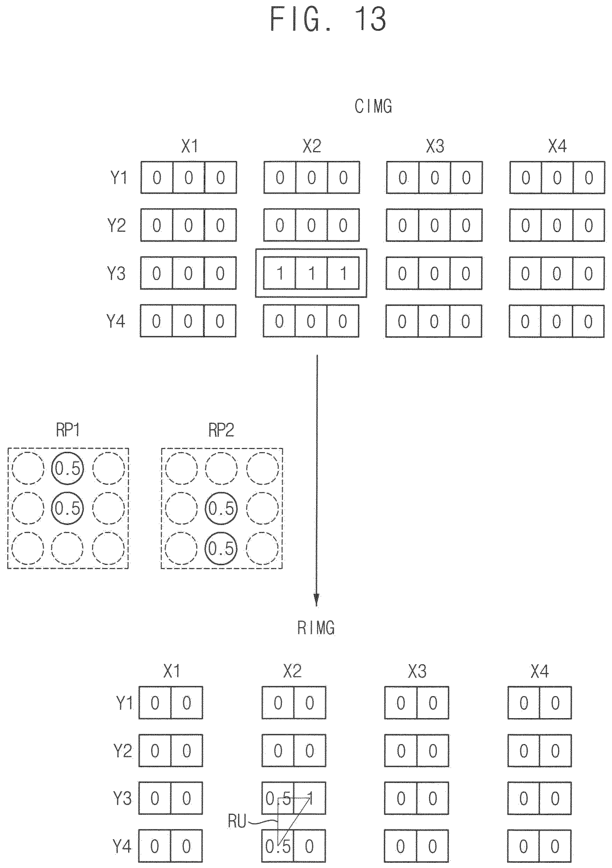

FIG. 11 is a diagram illustrating an embodiment of a structure of the pixel P in embodiments of the inventive concept, and FIGS. 12 and 13 are diagrams illustrating an embodiment in which the display device of FIG. 11 renders using the rendering filter.

The display device in the illustrated embodiment is substantially the same as the display device 1000 of FIG. 1 except for the structure of the pixels P and the rendering filter. Thus, the same reference numerals are used to refer to the same or similar element, and any repetitive explanation will be omitted.

Referring to FIGS. 1, and 11 to 13, a structure of the rendering filter for rendering the coordinate image data CIMG for the odd row may be different from a structure of the rendering filter for rendering the coordinate image data CIMG for the even row.

In an embodiment, it is assumed that the pixel P has the structure shown in FIG. 11, for example. The first rendering filter RP1 and the second rendering filter RP2 in the odd rows may be determined in the form of FIG. 12 and the first rendering filter RP1 and the second rendering filter RP2 in the even rows may be determined in the form of FIG. 13 so that the rendering unit RU only includes the first sub-pixel or the second sub-pixel. In an embodiment, when the rendering filter is applied to a predetermined coordinate, the display panel driver 10 may apply the rendering filter by arranging a center of the rendering filter at the predetermined coordinate. Hereinafter, it will be described in detail through an example.

It is assumed that the pixel P has the structure as shown in FIG. 11, and the coordinate image data CIMG for the (X1, Y3) coordinate (i.e., the odd row) includes data of the first color R having a value of 1, data of the second color B having a value of 1, and data of the third color G having a value of 1. The (X1, Y4) coordinate of the display panel 104 include the second sub-pixel for the second color B. The data for the second color B of the (X1, Y4) coordinate of the coordinate image data CIMG is 0, and the data for the second color B of the (X1, Y3) coordinate of the coordinate image data CIMG is 1. In this case, when the second rendering filter RP2 is applied to the (X1, Y4) coordinate, the rendering image data RIMG may include data for the second color B having a value of 0.5 (1 × 0.5 (top) + 0 × 0.5 (center) = 0.5) at the (X1, Y4) coordinate. The (X1, Y3) coordinate of the display panel 104 may include the second sub-pixel for the first color R. The data of the first color R of the (X1, Y4) coordinate of the coordinate image data CIMG is 0, and the data of the first color R of the (X1, Y3) coordinate of the coordinate image data CIMG is 1. In this case, when the first rendering filter RP1 is applied to the (X1, Y3) coordinate, the rendering image data RIMG may include data for the first color R having a value of 0.5 (1 × 0.5 (center) + 0 × 0.5 (bottom) = 0.5) at the (X1, Y3) coordinate. Therefore, the display panel driver 10 may render the coordinate image data CIMG for the (X1, Y3) coordinate with respect to the second sub-pixels of the (X1, Y3) and (X1, Y4) coordinates.

It is assumed that the pixel P has the structure as shown in FIG. 11, and the coordinate image data CIMG for the (X2, Y3) (i.e., the even row) coordinate includes data of the first color R having a value of 1, data of the second color B having a value of 1, and data of the third color G having a value of 1. The (X2, Y3) coordinate of the display panel 104 include the first sub-pixel for the second color B. The data for the second color B of the (X2, Y4) coordinate of the coordinate image data CIMG is 0, and the data for the second color B of the (X2, Y3) coordinate of the coordinate image data CIMG is 1. In this case, when the second rendering filter RP2 is applied to the (X2, Y3) coordinate, the rendering image data RIMG may include data for the second color B having a value of 0.5 (1 × 0.5 (center) + 0 × 0.5 (bottom) = 0.5) at the (X2, Y3) coordinate. The (X2, Y4) coordinate of the display panel 104 may include the first sub-pixel for the first color R. The data of the first color R of the (X2, Y4) coordinate of the coordinate image data CIMG is 0, and the data of the first color R of the (X2, Y3) coordinate of the coordinate image data CIMG is 1. In this case, when the first rendering filter RP1 is applied to the (X2, Y4) coordinate, the rendering image data RIMG may include data for the first color R having a value of 0.5 (1 × 0.5 (top) + 0 × 0.5 (center) = 0.5) at the (X2, Y4) coordinate. Therefore, the display panel driver 10 may render the coordinate image data CIMG for the (X2, Y3) coordinate with respect to the first sub-pixels of the (X2, Y3) and (X2, Y4) coordinates.

That is, when the display panel driver 10 renders the coordinate image data CIMG for the (X1, Y3) coordinate, the rendering unit RU may only include the second sub-pixel and when the display panel driver 10 renders the coordinate image data CIMG for the (X2, Y3) coordinate, the rendering unit RU may only include the first sub-pixel. As a result, when rendering is performed at all coordinates, the rendering unit RU may only include the first sub-pixel or only include the second sub-pixel.

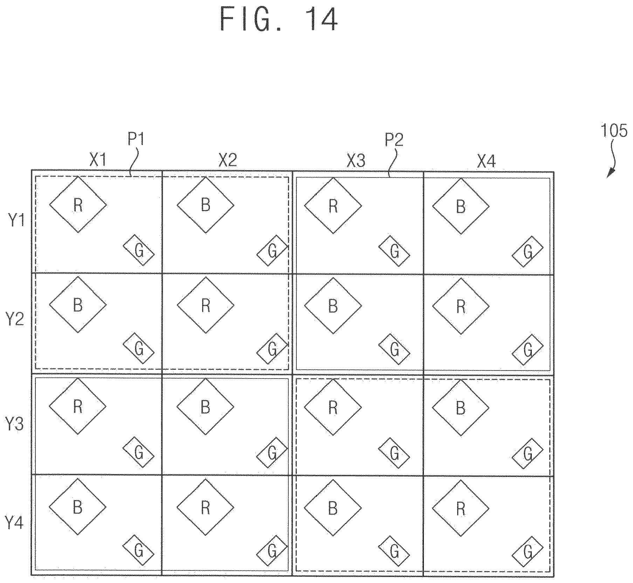

FIG. 14 is a diagram illustrating an embodiment of a structure of the pixel P according to the disclosure.

The display device in the illustrated embodiment is substantially the same as the display device 1000 of FIG. 1 except for the structure of the pixels P and the rendering filter. Thus, the same reference numerals are used to refer to the same or similar element, and any repetitive explanation will be omitted.

Referring to FIGS. 1 and 14, the structure of the rendering filter may be determined according to an arrangement of the first pixel P1 and the second pixel P2 and the input image data IMG. In an embodiment, it is assumed that the pixel P has the structure shown in FIG. 14, for example. Since the rendering unit RU only includes the first sub-pixel or the second sub-pixel, the first rendering filter RP1 and the second rendering filter RP2 in the odd rows may be determined in the form of FIG, the first rendering filter PR1 and the second rendering filter RP2 in the even rows may be determined in the form of FIG. 10, the first rendering filter PR1 and the second rendering filter RP2 in an odd columns may be determined in the form of FIG. 12, and the first rendering filter PR1 and the second rendering filter RP2 in an even columns may be determined in the form of FIG. 13. In an embodiment, when the rendering filter is applied to a predetermined coordinate, the display panel driver 10 may apply the rendering filter by arranging a center of the rendering filter at the predetermined coordinate, for example. Hereinafter, it will be described in detail through an example.

In an embodiment, in the odd rows and the odd columns, the first rendering filter RP1 and the second rendering filter RP2 may be selectively determined in the form of FIG. 9 or the form of FIG. 12, for example. When the form of FIG. 9 prevents a color shift phenomenon better than the form of FIG. 12 when a predetermined image is displayed on the display panel 105 in the odd rows and the odd columns, the display panel driver 10 may determine the first rendering filter RP1 and the second rendering filter RP2 as the form of FIG. 9.

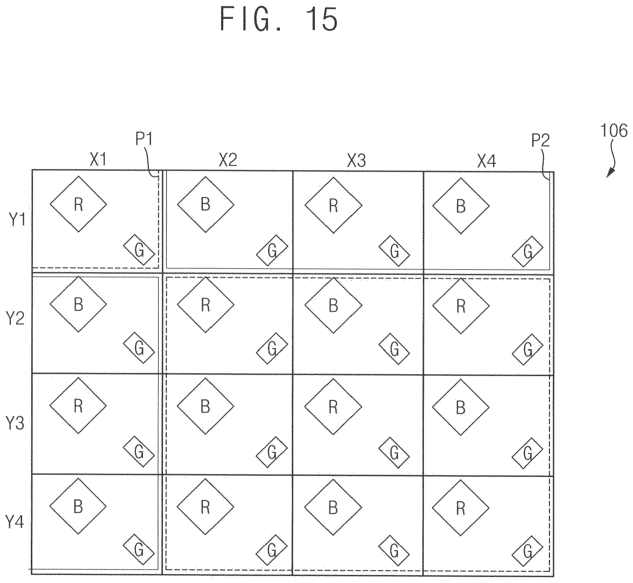

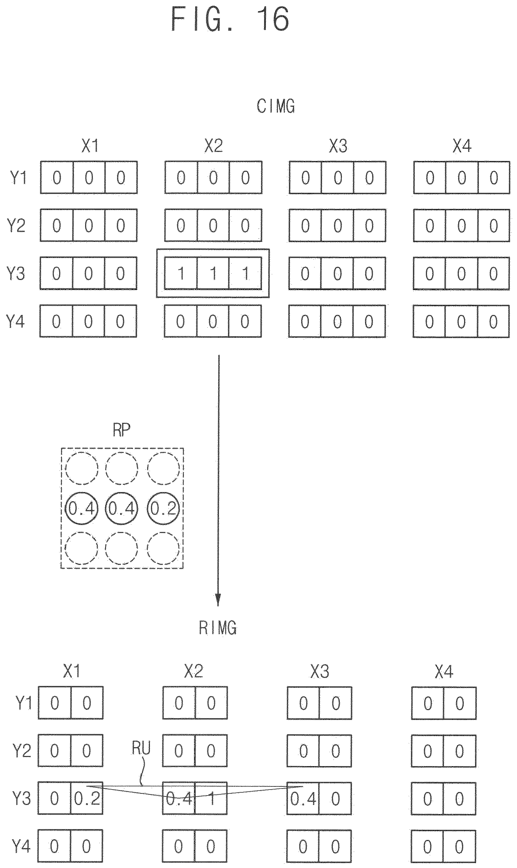

FIG. 15 is a diagram illustrating an embodiment of a structure of the pixel P in embodiments of the inventive concept, and FIGS. 16 to 18 are diagrams illustrating an embodiment in which the display device of FIG. 15 renders using the rendering filter.

Referring to FIGS. 1 and 15 to 18, the structure of the rendering filter RP may be determined according to an arrangement of the first pixel P1 and the second pixel P2 and a coordinate of the coordinate image data CIMG. In an embodiment, the rendering unit RU may include the first sub-pixel and the second sub-pixel when the coordinate of the coordinate image data CIMG is a coordinate of a boundary region between the first sub-pixel and the second sub-pixel, and the rendering unit RU may only include one of the first sub-pixel and the second sub-pixel when the coordinate of the coordinate image data CIMG is not the coordinate of the boundary region between the first sub-pixel and the second sub-pixel. In an embodiment, when a predetermined coordinate of the boundary region include more the first sub-pixel than the second sub-pixel, the display panel driver 10 may distribute the coordinate image data CIMG for the predetermined coordinate to the first sub-pixel than the second sub-pixel to render the coordinate image data CIMG.

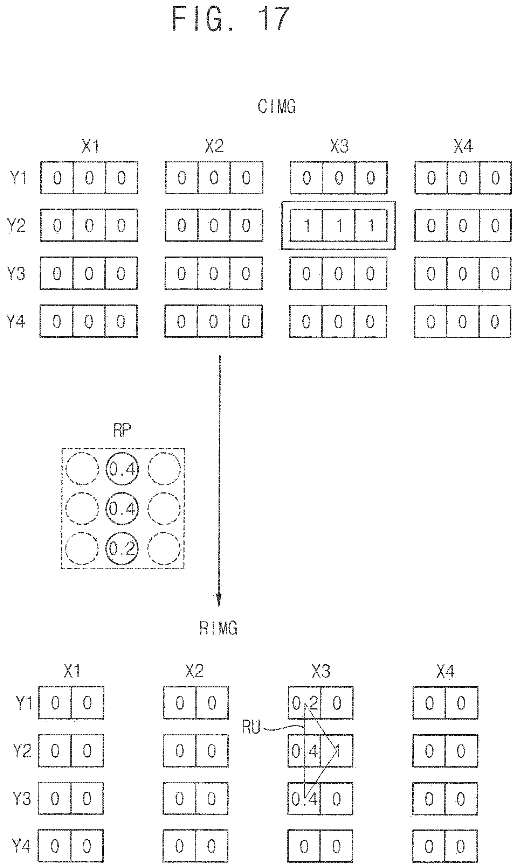

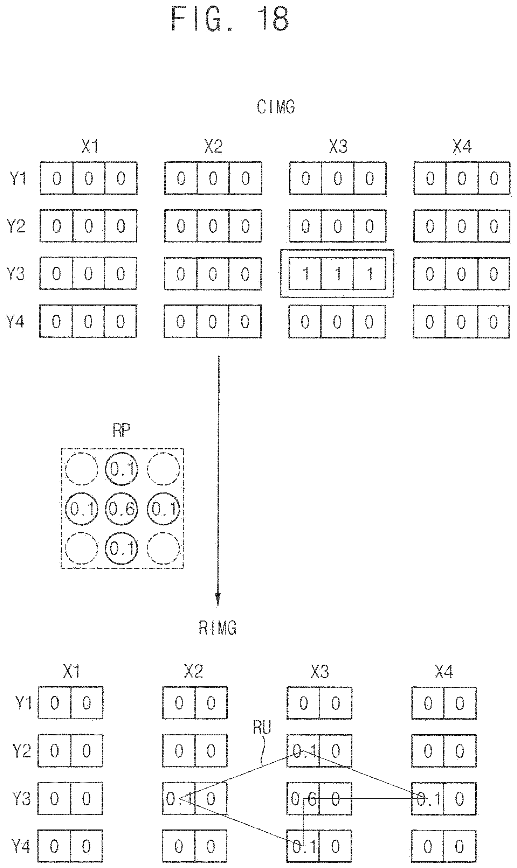

In an embodiment, the rendering filter RP may include the one-dimensional rendering filter (e.g., the rendering filter RP of FIGS. 16 and 17) and the two-dimensional rendering filter (e.g., the rendering filter RP of FIG. 18), and the display panel driver 10 may selectively use the one-dimensional rendering filter or the two-dimensional rendering filter according to the input image data IMG. In an embodiment, when the two-dimensional rendering filter prevents the color shift phenomenon better than the one-dimensional rendering filter when a predetermined image is displayed on the display panel 106, the display panel driver 10 may determine the two-dimensional rendering filter as the rendering filter RP, for example.

In an embodiment, the rendering filter RP may include the one-dimensional rendering filter (e.g., the rendering filter RP of FIGS. 16 and 17) and the two-dimensional rendering filter (e.g., the rendering filter RP of FIG. 18), and the display panel driver 10 may selectively use the one-dimensional rendering filter or the two-dimensional rendering filter according to the coordinate of the coordinate image data CIMG. Hereinafter, it will be described in detail through an example.

In an embodiment, it is assumed that the pixel P has the structure shown in FIG. 15, for example. In FIG. 15, the coordinates of the boundary region between the first sub-pixel and the second sub-pixel may be (X1, Y1), (X2, Y1), (X3, Y1), (X4, Y1), (X1, Y2), (X2 , Y2), (X3, Y2), (X4, Y2), (X1, Y3), (X2, Y3), (X4, Y3), (X1, Y4), (X2, Y4), (X3, Y4), and (X4, Y4).

It is assumed that the pixel P has the structure as shown in FIG. 15, and the coordinate image data CIMG for the (X2, Y3) coordinate (i.e., a left boundary region of the first pixel P1) includes data of the first color R having a value of 1, data of the second color B having a value of 1, and data of the third color G having a value of 1. The (X2, Y3) coordinate of the display panel 106 include the first sub-pixel for the second color B. The data for the second color B of the (X1, Y3) and the (X3, Y3) coordinates of the coordinate image data CIMG is 0, and the data for the second color B of the (X2, Y3) coordinate of the coordinate image data CIMG is 1. In this case, when the rendering filter RP is applied to the (X2, Y3) coordinate, the rendering image data RIMG may include data for the second color B having a value of 0.4 (1 × 0.4 (center) + 0 × 0.4 (left) + 0 × 0.2 (right) = 0.4) at the (X2, Y3) coordinate. The (X3, Y3) coordinate of the display panel 106 may include the first sub-pixel for the first color R. The data of the first color R of the (X3, Y3) and the (X4, Y3) coordinates of the coordinate image data CIMG is 0, and the data of the first color R of the (X2, Y3) coordinate of the coordinate image data CIMG is 1. In this case, when the rendering filter RP is applied to the (X3, Y3) coordinate, the rendering image data RIMG may include data for the first color R having a value of 0.4 (1 × 0.4 (left) + 0 × 0.4 (center) + 0 × 0.2 (right) = 0.4) at the (X3, Y3) coordinate. The (X1, Y3) coordinate of the display panel 106 may include the second sub-pixel for the first color R. The data of the first color R of the (X1, Y3) coordinate of the coordinate image data CIMG is 0, and the data of the first color R of the (X2, Y3) coordinate of the coordinate image data CIMG is 1. In this case, when the rendering filter RP is applied to the (X1, Y3) coordinate, the rendering image data RIMG may include data for the first color R having a value of 0.2 (1 × 0.2 (right) + 0 × 0.4 (center) = 0.2) at the (X1, Y3) coordinate. Therefore, the display panel driver 10 may render the coordinate image data CIMG for the (X2, Y3) coordinate with respect to the first sub-pixels of the (X2, Y3) and (X3, Y3) coordinates and the second sub-pixel of the (X1, Y3) coordinate.

It is assumed that the pixel P has the structure as shown in FIG. 15, and the coordinate image data CIMG for the (X3, Y2) coordinate (i.e., a top boundary region of the first pixel P1) includes data of the first color R having a value of 1, data of the second color B having a value of 1, and data of the third color G having a value of 1. The (X3, Y2) coordinate of the display panel 106 include the first sub-pixel for the second color B. The data for the second color B of the (X3, Y1) and the (X3, Y3) coordinates of the coordinate image data CIMG is 0, and the data for the second color B of the (X3, Y2) coordinate of the coordinate image data CIMG is 1. In this case, when the rendering filter RP is applied to the (X3, Y2) coordinate, the rendering image data RIMG may include data for the second color B having a value of 0.4 (1 × 0.4 (center) + 0 × 0.4 (top) + 0 × 0.2 (bottom) = 0.4) at the (X3, Y2) coordinate. The (X3, Y3) coordinate of the display panel 106 may include the first sub-pixel for the first color R. The data of the first color R of the (X3, Y3) and the (X3, Y4) coordinates of the coordinate image data CIMG is 0, and the data of the first color R of the (X3, Y2) coordinate of the coordinate image data CIMG is 1. In this case, when the rendering filter RP is applied to the (X3, Y3) coordinate, the rendering image data RIMG may include data for the first color R having a value of 0.4 (1 × 0.4 (top) + 0 × 0.4 (center) + 0 × 0.2 (bottom) = 0.4) at the (X3, Y3) coordinate. The (X3, Y1) coordinate of the display panel 106 may include the second sub-pixel for the first color R. The data of the first color R of the (X3, Y1) coordinate of the coordinate image data CIMG is 0, and the data of the first color R of the (X3, Y2) coordinate of the coordinate image data CIMG is 1. In this case, when the rendering filter RP is applied to the (X3, Y1) coordinate, the rendering image data RIMG may include data for the first color R having a value of 0.2 (1 × 0.2 (bottom) + 0 × 0.4 (center) = 0.2) at the (X3, Y1) coordinate. Therefore, the display panel driver 10 may render the coordinate image data CIMG for the (X3, Y2) coordinate with respect to the first sub-pixels of the (X3, Y2) and (X3, Y3) coordinates and the second sub-pixel of the (X3, Y1) coordinate.

It is assumed that the pixel P has the structure as shown in FIG. 15, and the coordinate image data CIMG for the (X3, Y3) coordinate (i.e., a center region of the first pixel P1) includes data of the first color R having a value of 1, data of the second color B having a value of 1, and data of the third color G having a value of 1. The (X3, Y2) coordinate of the display panel 106 include the first sub-pixel for the second color B. The data for the second color B of the (X3, Y1), the (X2, Y2), the (X3, Y3) and the (X4, Y2) coordinates of the coordinate image data CIMG is 0, and the data for the second color B of the (X3, Y3) coordinate of the coordinate image data CIMG is 1. In this case, when the rendering filter RP is applied to the (X3, Y2) coordinate, the rendering image data RIMG may include data for the second color B having a value of 0.1 (1 × 0.1 (bottom) + 0 × 0.1 (top) + 0 × 0.1 (right) + 0 × 0.1 (left) + 0 × 0.6 (center) = 0.1) at the (X3, Y2) coordinate. It is the same for (X4, Y3), (X3, Y4), and (X2, Y3). Thus, any repetitive explanation will be omitted. The (X3, Y3) coordinate of the display panel 106 may include the first sub-pixel for the first color R. The data of the first color R of the (X3, Y2), the (X4, Y3), the (X3, Y4), and the (X2, Y3) coordinates of the coordinate image data CIMG is 0, and the data of the first color R of the (X3, Y3) coordinate of the coordinate image data CIMG is 1. In this case, when the rendering filter RP is applied to the (X3, Y3) coordinate, the rendering image data RIMG may include data for the first color R having a value of 0.6 (1 × 0.6 (center) + 0 × 0.1 (top) + 0 × 0.1 (right) + 0 × 0.1 (bottom) + 0 × 0.1 (left) = 0.6) at the (X3, Y3) coordinate. Therefore, the display panel driver 10 may render the coordinate image data CIMG for the (X3, Y3) coordinate with respect to the first sub-pixels of the (X3, Y2), (X2, Y3), (X3, Y3), (X4, Y3), and (X3, Y4) coordinates and the second sub-pixel of the (X3, Y3) coordinate.

That is, when the display panel driver 10 renders the coordinate image data CIMG for the (X2, Y3) coordinate (i.e., the left boundary region of the first pixel P1), the rendering unit RU may include the first sub-pixels of the (X2, Y3) and the (X3, Y3) coordinates and the second sub-pixel of the (X1, Y3) coordinate. When the display panel driver 10 renders the coordinate image data CIMG for the (X3, Y2) coordinate (i.e., the top boundary region of the first pixel P1), the rendering unit RU may include the first sub-pixels of the (X3, Y2) and the (X3, Y3) coordinates and the second sub-pixel of the (X3, Y1) coordinate. When the display panel driver 10 renders the coordinate image data CIMG for the (X3, Y3) coordinate (i.e., the center region of the first pixel P1), the rendering unit RU may include the first sub-pixels of the (X3, Y2), the (X2, Y3), the (X3, Y3), the (X4, Y3), and the (X3, Y4) coordinates. As a result, when rendering is performed at all coordinates, the rendering unit RU may include the first sub-pixel and the second sub-pixel in the boundary region, and only include the first sub-pixel or only include the second sub-pixel in a region excepting for the boundary region.

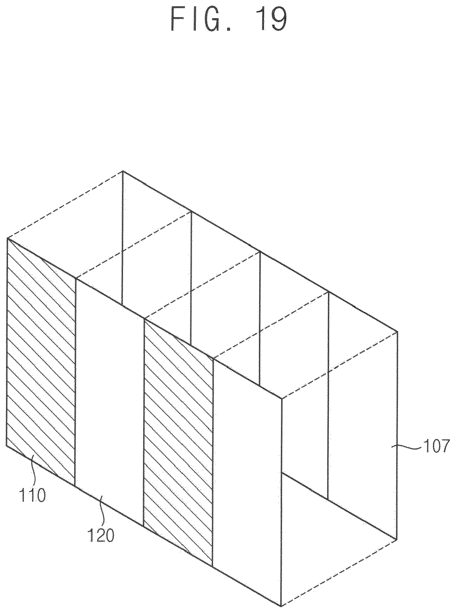

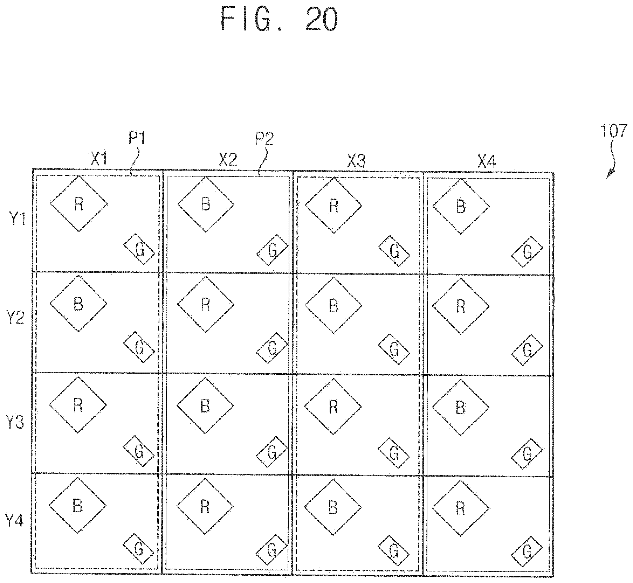

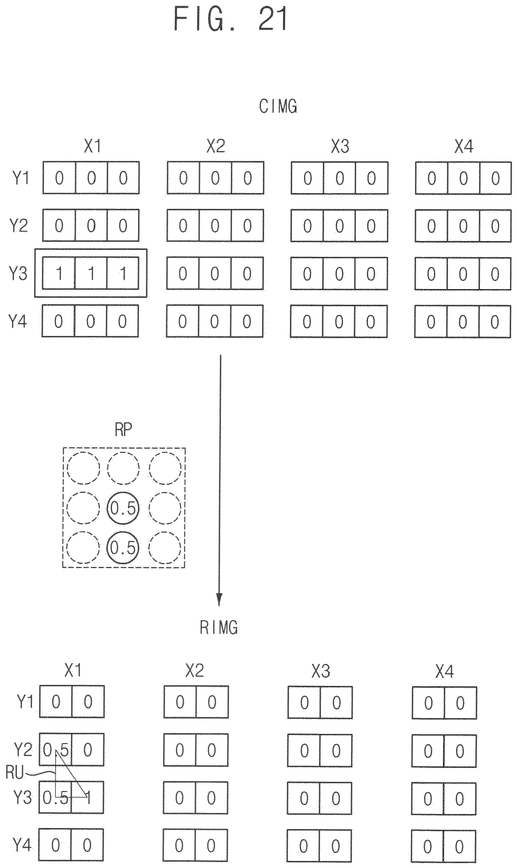

FIG. 19 is a diagram illustrating an embodiment of a part of a display panel 107 of a display device according to the inventive concept, FIG. 20 is a diagram illustrating an embodiment of a structure of the pixel P of the display device of FIG. 19, and FIG. 21 is a diagram illustrating an embodiment in which the display device of FIG. 19 renders using the rendering filter.

The display device in the illustrated embodiment is substantially the same as the display device 1000 of FIG. 1 except for the structure of the pixels P, the rendering filter, a blocking region 110, and a transmissive region 120. Thus, the same reference numerals are used to refer to the same or similar element, and any repetitive explanation will be omitted.

FIGS. 1 and 19 to 21 , the display device may include a barrier including a display panel 107, a blocking region 110, and a transmissive region 120. In an embodiment, the barrier may be a parallax barrier, for example. The display panel 107 may include the first pixel P1 displaying a left eye image (i.e., a pixel for a left eye) and a second pixel P2 (i.e., a pixel for a right eye) displaying a right eye image.

The barrier may be disposed to face the display panel 107 in a direction in which the display panel 107 displays an image. The display panel 107 may display the left eye image and the right eye image together to provide a three-dimensional image to the user. The left eye image and the right eye images are planar images (i.e., the two-dimensional images), and may be alternately arranged along a horizontal direction. In an embodiment, the left eye image and right eye image may have a stripe shape alternately arranged in a horizontal direction, for example. The barrier may divide a space so that the left eye image is observed from the user's left eye and the right eye image is observed from the user's right eye. As the left eye image and the right eye image are observed in the user's left and right eyes, respectively, the user may feel the three-dimensional image.

The barrier may include the blocking region 110 through which light is not transmitted and the transmissive region 120 through which light is transmitted for space division. The blocking region 110 and the transmissive region 120 may have a stripe shape extending in a vertical direction. Also, the blocking region 110 and the transmissive region 120 may be alternately disposed in a horizontal direction. In an embodiment, the blocking region 110 may be an opaque region, and the transmissive region 120 may be a transparent region, for example. In the user's left eye, the left eye image may be observed through the transmissive region 120, and the right eye image may not be observed because the blocking region 110 may block the image. Conversely, the user's right eye may not observe the right eye image through the transmissive region 120, and the left eye image may be blocked by the blocking region 110. As such, the left eye image and the right eye image may be divided and transmitted to the user's left eye and right eye, respectively, so that the user may feel the three-dimensional image.

In an embodiment, it is assumed that the pixel P has the structure shown in FIG. 20, for example. The rendering filter RP may be determined in the form of FIG. 21 so that the rendering unit RU only includes the first sub-pixel or the second sub-pixel. In an embodiment, when the rendering filter RP is applied to a predetermined coordinate, the display panel driver 10 may apply the rendering filter RP by arranging a center of the rendering filter at the predetermined coordinate, for example. Hereinafter, it will be described in detail through an example.

It is assumed that the pixel P has the structure as shown in FIG. 20, and the coordinate image data CIMG for the (X2, Y2) coordinate includes data of the first color R having a value of 1, data of the second color B having a value of 1, and data of the third color G having a value of 1. The (X1, Y2) coordinate of the display panel 107 include the first sub-pixel for the second color B. The data for the second color B of the (X1, Y2) coordinate of the coordinate image data CIMG is 0, and the data for the second color B of the (X1, Y3) coordinate of the coordinate image data CIMG is 1. In this case, when the rendering filter RP is applied to the (X1, Y2) coordinate, the rendering image data RIMG may include data for the second color B having a value of 0.5 (1 × 0.5 (bottom) + 0 × 0.5 (center) = 0.5) at the (X1, Y2) coordinate. The (X1, Y3) coordinate of the display panel 102 may include the first sub-pixel for the first color R. The data of the first color R of the (X1, Y4) coordinate of the coordinate image data CIMG is 0, and the data of the first color R of the (X1, Y3) coordinate of the coordinate image data CIMG is 1. In this case, when the rendering filter RP is applied to the (X1, Y3) coordinate, the rendering image data RIMG may include data for the first color R having a value of 0.5 (1 × 0.5 (center) + 0 × 0.5 (bottom) = 0.5) at the (X1, Y3) coordinate. Therefore, the display panel driver 10 may render the coordinate image data CIMG for the (X1, Y3) coordinate with respect to the first sub-pixels of the (X1, Y2) and the (X1, Y3) coordinates. That is, when the display panel driver 10 renders the coordinate image data CIMG for the (X1, Y3) coordinate, the rendering unit RU may only include the first sub-pixel. As a result, when rendering is performed at all coordinates, the rendering unit RU may only include the first sub-pixel or only include the second sub-pixel.

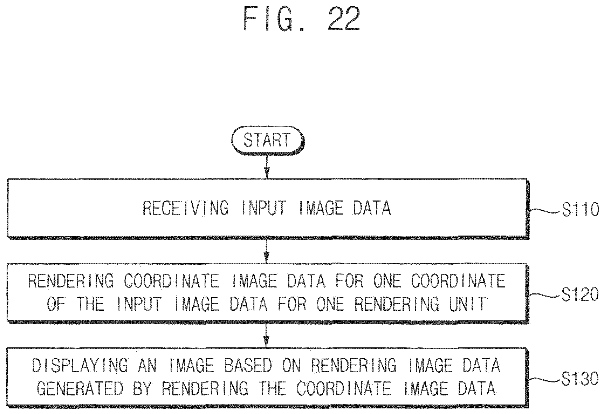

FIG. 22 is a flowchart illustrating an embodiment of a method of driving a display device according to the disclosure.

Referring to FIG. 22, the method of FIG. 22 may receive input image data (S 110), render coordinate image data for one coordinate of the input image data for one rendering unit (S120), and display an image based on rendering image data generated by rendering the coordinate image data (S130).

Specifically, the method of FIG. 22 may render coordinate image data for one coordinate of the input image data for one rendering unit (S120). In an embodiment, the rendering unit may only include one of a first sub-pixel included in a first pixel having a first viewing angle and a second sub-pixel included in a second pixel having a second viewing angle different from the first viewing angle. In an embodiment, the rendering unit may only include the first sub-pixels of one first pixel or may only include the second sub-pixels of one second pixel. The first pixel may be a private pixel and the second pixel may be a normal pixel, for example. In an embodiment, the first viewing angle may be narrower than the second viewing angle, for example. The display panel driver may drive the first pixel in a first mode and drive the first pixel and the second pixel in a second mode. The first mode may be a private mode in which a user viewing the display panel from the side cannot see a normal image, and the second mode may be a general mode in which a user viewing the display panel from the side may see the normal image.

As discussed, embodiments can provide a display device comprising: a display panel including a first pixel having a first viewing angle and a second pixel having a second viewing angle different from the first viewing angle; and a display panel driver arranged to apply data voltages to the first pixel and the second pixel and arranged to render coordinate image data for one coordinate of input image data for one rendering unit, and wherein the one rendering unit only includes one of a first sub-pixel included in the first pixel and a second sub-pixel included in the second pixel.

The first pixel and the second pixel may have a diamond pentile structure. In an embodiment, each of the first pixel and the second pixel may include a sub-pixel displaying one first color R, a sub-pixel displaying one second color B, and a sub-pixel displaying two third color G, for example. The sub-pixels may be included in a form of a diamond. Here, an area size of the sub-pixel displaying the third color may be smaller than each of an area size of the sub-pixel displaying the first color and an area size of the sub-pixel displaying the second color. The first color R may be red, the second color B may be blue, and the third color G may be green.

The rendering unit may only include the first sub-pixels of one first pixel or may only include the second sub-pixels of one second pixel, for example.

The first pixel may be a private pixel and the second pixel may be a normal pixel. In an embodiment, the first viewing angle may be narrower than the second viewing angle, for example. Therefore, when a user views the display panel from a side, an image displayed on the first pixel is seen with a lower luminance than an image displayed on the second pixel.

The display unit may include a plurality of first pixels and a plurality of second pixels.

As discussed, embodiments can provide a display device comprising: a display panel including a first pixel arranged to display a left eye image and a second pixel arranged to display a right eye image; and a display panel driver arranged to apply data voltages to the first pixel and the second pixel and arranged to render coordinate image data for one coordinate of input image data for one rendering unit, and wherein the one rendering unit only includes one of a first sub-pixel included in the first pixel and a second sub-pixel included in the second pixel.

Embodiments can provide a method of driving a display device comprising: receiving input image data; rendering coordinate image data for one coordinate of the input image data for one rendering unit; and displaying an image based on rendering image data generated by rendering the coordinate image data, and wherein the one rendering unit only includes one of a first sub-pixel included in a first pixel having a first viewing angle and a second sub-pixel included in a second pixel having a second viewing angle different from the first viewing angle.

The inventive concepts may be applied to any electronic device including the display device. In an embodiment, the inventive concepts may be applied to a television ("TV"), a digital TV, a three dimensional ("3D") TV, a mobile phone, a smart phone, a tablet computer, a virtual reality ("VR") device, a wearable electronic device, a personal computer ("PC"), a home appliance, a laptop computer, a personal digital assistant ("PDA"), a portable multimedia player ("PMP"), a digital camera, a music player, a portable game console, a navigation device, etc., for example.

The foregoing is illustrative of the inventive concept and is not to be construed as limiting thereof. Although a few embodiments of the inventive concept have been described, those skilled in the art will readily appreciate that many modifications are possible in the embodiments without materially departing from the novel teachings and advantages of the inventive concept. Accordingly, all such modifications are intended to be included within the scope of the inventive concept as defined in the claims. In the claims, means-plus-function clauses are intended to cover the structures described herein as performing the recited function and not only structural equivalents but also equivalent structures. Therefore, it is to be understood that the foregoing is illustrative of the inventive concept and is not to be construed as limited to the illustrative embodiments disclosed, and that modifications to the disclosed embodiments, as well as other embodiments, are intended to be included within the scope of the appended claims. The inventive concept is defined by the following claims, with equivalents of the claims to be included therein.

## Claims

1. A display device comprising:
a display panel including a first pixel having a first viewing angle and a second pixel having a second viewing angle different from the first viewing angle; and
a display panel driver arranged to apply data voltages to the first pixel and the second pixel and arranged to render coordinate image data for one coordinate of input image data for one rendering unit, and
wherein the one rendering unit only includes one of a first sub-pixel included in the first pixel and a second sub-pixel included in the second pixel.

2. The display device of claim 1, wherein the display panel driver is arranged to render the coordinate image data using a rendering filter for a first color and a second color.

3. The display device of claim 2, wherein the first color is a red and the second color is a blue.

4. The display device of claim 2 or 3, wherein a structure of the rendering filter is determined according to an arrangement of the first pixel and the second pixel; or
wherein a structure of the rendering filter is determined according to an arrangement of the first pixel and the second pixel and the input image data.

5. The display device of claim 2 or 3, wherein a structure of the rendering filter is determined according to an arrangement of the first pixel and the second pixel and a coordinate of the coordinate image data;
optionally wherein the one rendering unit includes the first sub-pixel and the second sub-pixel when the one coordinate of the coordinate image data is a coordinate of a boundary region between the first sub-pixel and the second sub-pixel, and wherein the one rendering unit only includes one of the first sub-pixel and the second sub-pixel when the one coordinate of the coordinate image data is not the coordinate of the boundary region between the first sub-pixel and the second sub-pixel.

6. The display device of any one of claims 2 to 5, wherein the rendering filter includes a first rendering filter for the first color and a second rendering filter for the second color.

7. The display device of claim 2 or 3, wherein a structure of the rendering filter for rendering the coordinate image data for an odd row is different from a structure of the rendering filter for rendering the coordinate image data for an even row.

8. The display device of any one of claims 2 to 7, wherein the rendering filter is a one-dimensional rendering filter; or
wherein the rendering filter is a two-dimensional rendering filter.

9. The display device of any one of claims 2 to 7, wherein the rendering filter includes a one-dimensional rendering filter and a two-dimensional rendering filter, and
wherein the display panel driver selectively uses the one-dimensional rendering filter or the two-dimensional rendering filter according to the input image data.

10. The display device of any one of claims 1 to 9, wherein the first viewing angle is narrower than the second viewing angle;
optionally wherein the display panel driver is arranged to drive the first pixel in a first mode, and to drive the first pixel and the second pixel in a second mode different from the first mode.

11. The display device of any one of claims 1 to 10, wherein the first pixel and the second pixel have a diamond pentile structure.

12. A display device comprising:
a display panel including a first pixel arranged to display a left eye image and a second pixel arranged to display a right eye image; and
a display panel driver arranged to apply data voltages to the first pixel and the second pixel and arranged to render coordinate image data for one coordinate of input image data for one rendering unit, and
wherein the one rendering unit only includes one of a first sub-pixel included in the first pixel and a second sub-pixel included in the second pixel.

13. A method of driving a display device comprising:
receiving input image data;
rendering coordinate image data for one coordinate of the input image data for one rendering unit; and
displaying an image based on rendering image data generated by rendering the coordinate image data, and
wherein the one rendering unit only includes one of a first sub-pixel included in a first pixel having a first viewing angle and a second sub-pixel included in a second pixel having a second viewing angle different from the first viewing angle.

14. The method of claim 13, wherein the coordinate image data is rendered using a rendering filter for a first color and a second color.

15. The method of claim 13 or 14, wherein the first viewing angle is narrower than the second viewing angle;
optionally wherein the first pixel is driven in a first mode, and the first pixel and the second pixel are driven in a second mode different from the first mode.
